## Europäisches Patentamt
## European Patent Office
## Office européen des brevets

(11) Veröffentlichungsnummer: **0 039 395**
**B1**

(12) **EUROPÄISCHE PATENTSCHRIFT**

(45) Veröffentlichungstag der Patentschrift:
29.05.85

(21) Anmeldenummer: **81101732.6**

(22) Anmeldetag: **10.03.81**

(51) Int. Cl.⁴: **C 08 L  51/06,** C 08 L  23/16,
C 08 L  23/12

(54) **Ternäre thermoplastische Formmasse enthaltend Äthylen-Propylen-Mischpolymerisat.**

(30) Priorität: **02.04.80  DE 3012763**

(43) Veröffentlichungstag der Anmeldung:
**11.11.81 Patentblatt 81/45**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**EP - A - 0 004 313**
**DE - A - 1 217 608**
**DE - A - 2 642 053**
**DE - A - 2 732 969**
**DE - B - 1 145 792**
**GB - A - 1 154 447**
**US - A - 4 153 587**

(73) Patentinhaber: **DYNAMIT NOBEL
AKTIENGESELLSCHAFT, Postfach 1209,
D-5210 Troisdorf, Bez. Köln (DE)**

(72) Erfinder: **Spielau, Paul, Dr., Van-Gogh-Platz 10,
D-5210 Troisdorf-Eschmar (DE)**
Erfinder: **Kühnel, Werner,
D-5206 Neunkirchen-Schöneshof (DE)**
Erfinder: **Welsch, Dietmar, Schlesische Strasse 6,
D-8832 Weissenburg/Bay (DE)**
Erfinder: **Klingberg, Gerd, Heckenweg 17,
D-5204 Lohmar 1 (DE)**
Erfinder: **Konermann, Hans-Ewald, Dr., Kiefernstrasse 2,
D-5210 Troisdorf (DE)**
Erfinder: **Leeder, Wilfried, Petersbergstrasse 11,
D-5210 Troisdorf (DE)**

**Beschreibung**

Die Erfindung betrifft eine Formmasse auf Basis von Äthylen-Propylen-Mischpolymerisat, Polypropylen und Polyäthylen.

Polypropylen besitzt neben einigen sehr günstigen Eigenschaften, wie beispielsweise einer relativ niedrigen Dichte, einer ausgezeichneten Beständigkeit gegen höhere Temperaturen und wäßrigen und nichtwäßrigen Flüssigkeiten, auch weniger günstige Eigenschaften, wozu die mangelhafte Schlagfestigkeit bei Temperaturen unterhalb Raumtemperatur, insbesondere unterhalb 0°C zu zählen ist. Ausreichende Schlagfestigkeit ist jedoch für viele Anwendungen, wie z. B. Transportkästen, Koffer, Automobilteile und ähnliche, erforderlich und von Bedeutung.

Polyäthylen hoher Dichte, aus welchem man derartige Formteile gewöhnlich herstellt, besitzt zwar diese gute hohe Schlagfestigkeit, zeigt jedoch eine geringere Beständigkeit gegen hohe Temperaturen.

Die Äthylen-Propylen-Mischpolymerisate, sowohl die gesättigten als auch die ungesättigten, weisen neben guten mechanischen Eigenschaften hohe Alterungs- und Ozonfestigkeit und Kältefestigkeit auf, so daß sie insbesondere auch für der Bewitterung ausgesetzte Anwendungen hervorragend geeignet sind. Wegen ihrer kautschukartigen Eigenschaften versetzt man sie gerne mit härteren Polymeren.

Man hat nun vielfach versucht, die Eigenschaften von Polypropylen und/oder Polyäthylen und/oder Äthylen-Propylen-Mischpolymerisaten durch Herstellen binärer oder ternärer Formmassen zu verbinden. Beispielsweise ist es bekannt, Gemische aus Polypropylen und Polyäthylen zu verwenden, die jedoch eine kaum verbesserte Schlagfestigkeit im Vergleich zu Polypropylen allein besitzen. Aus den DE-OS 2 202 706 und 2 202 738 sind Abmischungen aus isotaktischem Polypropylen und Äthylen-Propylen-Kautschuken bekannt, die entweder durch Zugabe von Vulkanisationsmitteln nach der Abmischung teilvernetzt werden oder bei deren Herstellung bereits teilvernetztes EPM eingesetzt wird. Solche Mischungen sind jedoch in bezug auf die erreichbaren Zugfestigkeitswerte, die Bruchdehnungswerte, die Weiterreißfestigkeiten sowie die Härtewerte, gemessen bei 100°C für viele Anwendungsfälle noch verbesserungsbedürftig, d. h., sie genügen den gestellten Anforderungen nicht für alle Anwendungsfälle.

Abmischungen von Polyäthylen mit EPDM-Polymeren, deren Kristallinität zwischen 10 bis 20% liegt, sind aus der US-PS 3 919 358 bekannt. Derartige Produkte besitzen zwar hohe Reißfestigkeiten, aber wegen der niedrigen Schmelztemperatur des Polyäthylens keine ausreichende Wärmebeständigkeit, auch die bleibende Verformung, die Steifigkeit und die Härte sind unbefriedigend.

Aus der DE-OS 2 732 969 ist eine binäre Formmasse aus unvernetzten Äthylen-Propylen-Sequenz-Polymeren mit isotaktischem Polypropylen bekannt. Es hat sich jedoch gezeigt, daß solche Abmischungen je nach Zusammensetzung entweder keine ausreichende Kälteflexibilität oder keine ausreichende Wärmeformbeständigkeit haben.

Die aus der GB-PS 1 154 447 bekannte ternäre Formmasse aus 50 bis 90 Gew.-% eines kristallinen Polypropylens, das zu mehr als 90 Gew.-% in n-Heptan unlöslich ist und 5 bis 30 Gew.-% Polyäthylen und 5 bis 40 Gew.-% Äthylen-Propylen-Block-Copolymer, das in n-Heptan zu mindestens 80 Gew.-% unlöslich ist, weist eine Zugfestigkeit von nur etwa 10 N/mm² auf und ist bei Temperaturen von unter −30°C nicht mehr flexibel, d. h. es wird spröde und bricht.

Aus der DE-OS 2 828 763 ist eine Polypropylen-Formmasse aus 90 bis 60 Gew.-% Polypropylen, 4 bis 30 Gew.-% Polyäthylen und 6 bis 30 Gew.-% eines kautschukartigen Äthylen-Propylen-Mischpolymerisates bekannt, bei der der Schmelzindex der Kautschukmischung aus Äthylen-Propylen-Mischpolymerisat und Polyäthylen zu dem Schmelzindex des Polypropylens im Verhältnis von 2−15 der MFI (230/5) zueinander betragen soll. Die mit dieser Formmasse erzielbaren Eigenschaften lassen insbesondere, was beispielsweise die Kerbschlagzähigkeit bei sehr tiefen Temperaturen betrifft, nach wie vor wesentlich zu wünschen übrig, da hieraus hergestellte Produkte, wie beispielsweise Stoßstangen, bei Minusgraden von 30°C und mehr keineswegs gebrauchstüchtig mehr sind und somit beispielsweise diese Formmasse für diesen Anwendungszweck nicht brauchbar ist.

Auch zeigen nicht alle Formmassen die gewünschte gute Verarbeitbarkeit im Spritzgießverfahren, wegen eines viel zu niedrigen Schmelzindexes.

Aus der DE-OS 2 742 910 hingegen ist ein thermoplastisches Elastomergemisch aus 25 bis 85 Gew.-% eines praktisch amorphen Äthylen-Propylen-Mischpolymerisates und 15 bis 75 Gew.-% eines kristallinen Blockmischpolymerisates von Propylen und ggf. zusätzlichem Polyäthylen bekannt. Wie in der DE-OS 2 821 342 ausgeführt, ist diese Formmasse in bezug auf die Härte, die Zugfestigkeit, bessere Beständigkeit gegen hohe Temperaturen verbesserungsbedürftig, und wird beispielsweise in diesen Eigenschaften durch eine Formmasse gemäß der DE-OS 2 821 342 übertroffen, wie die Tabellen 1 und 2 der DE-OS 2 821 342 nachweisen.

Aus der DE-OS 2 821 342 sind thermoplastische Elastomer-Gemische, enthaltend 30 bis 75 Teile kristallines isotaktisches Propylen-Homopolymerisat und 25 bis 70 Teile eines im wesentlichen amorphen kautschukartigen Äthylen-Propylen-Polymerisates und maximal 15 Teile Polyäthylen, die anteilig das Propylen-Homopolymerisat ersetzen, bekannt. Diese Gemische weisen zwar gegenüber binären Formmassen teils verbesserte Eigenschaften auf, die sie auch zur Herstellung von Stoßstangen für

**0 039 395**

Kraftfahrzeuge geeigneter machen. Es hat sich jedoch gezeigt, daß für extreme Beanspruchungen, die mechanischen Eigenschaften der aus der DE-OS 2 821 342 bekannten Elastomer-Gemische, insbesondere was die Kerbschlagzähigkeit, Zugfestigkeit und Kälteflexibilität angeht, noch verbesserungsbedürftig ist.

Der Erfindung liegt die Aufgabe zugrunde, eine thermoplastische Formmasse zu schaffen, die hohe Wärmeformbeständigkeit, gute mechanische Eigenschaften, insbesondere Zugfestigkeiten, eine hohe Kälteflexibilität, d. h. Kerbschlagzähigkeit bei tiefen Temperaturen aufweist, die darüber hinaus pelletisierbar ist und insgesamt gegenüber den bekannten binären und ternären Formmassen in bezug auf eine oder mehrere Eigenschaften verbessert ist. Es ist auch ein Anliegen der Erfindung, mit einfachen Mitteln eine optimale schlagfeste ternäre Formmasse mit gewünschten Eigenschaften zu erhalten, die sich nicht zufällig als Randprodukt neben anderen bei bekannten Formmassen einfindet. Die gewünschte Formmasse sollte auch hinsichtlich ihrer Schrumpfneigung verbessert sein und sich besonders zur Anwendung im Spritzgußverfahren eignen.

Es wurde nun gefunden, daß die vorangehend genannte Aufgabenstellung mit einfachen Mitteln optimal durch eine Formmasse, enthaltend

a) 35 bis 50 Gew.-% eines durch Aufpolymerisieren des Anteiles von Äthylen-Propylen-Mischpolymer und/oder Äthylen-Propylen-Terpolymer auf Polyäthylen hergestelltes modifiziertes Äthylen-Propylen-Mischpolymerisat mit einem Äthylengehalt des Äthylen-Propylen-Mischpolymerisatanteiles von mindestens 65 Gew.-%, einem Schmelzindex MFI (230/5) von 0,8 bis 2,0 g/10 min und
b) 30 bis 60 Gew.-% Polypropylen-Homopolymer mit einem Schmelzindex MFI (230/5) von 25 bis 65 g/10 min und/oder Propylen-Mischpolymer mit einem Schmelzindex MFI (230/5) von 15 bis 50 g/10 min und
c) 3 bis 30 Gew.-% Polyäthylen, wobei der Polyäthylenblock des modifizierten Äthylen-Propylen-Mischpolymerisates auf die Menge des Polyäthylens anrechenbar ist,

gelöst wird.

Überraschenderweise hat die Erfindung einen Weg gewiesen, Formmassen mit hoher Schlagfestigkeit, hoher Wärmeformbeständigkeit, hoher Kerbschlagzähigkeit auch bei tiefen Temperaturen von −40°C zu schaffen, die sich zudem hervorragend zu Spritzgußformteilen unter Vermeidung von Schrumpf verarbeiten lassen. Die bereits zum Teil vorhandenen guten einzelnen Eigenschaftswerte sind bei der Erfindung alle vorhanden und ergeben eine in jeder Weise ausgewogene Formmasse mit guten und sehr guten Eigenschaften.

Im Vergleich zu den Formmassen beispielsweise nach der DE-OS 2 828 763 kann die Erfindung einfach verwirklicht werden, da sie einen Weg zeigt, durch Auswahl der einzelnen Komponenten gemäß ihren Schmelzindizes und unter Einhaltung bestimmter Gewichtsanteile der Komponenten in der Formmasse zuverlässig eine ternäre Formmasse mit den gewünschten Eigenschaften zu schaffen. Von der Polypropylen-Formmasse gemäß der DE-OS 2 828 763 unterscheidet sich die Erfindung wesentlich auch durch ihren hohen Anteil an Äthylen-Propylen-Mischpolymerisat, der zu einer Formmasse mit gegenüber den vorbekannten verbesserten Eigenschaften führt, was bei der Vielzahl der bekannten Formmassen nicht zu erwarten war.

Gegenüber den Formmassen aus den DE-OS 2 742 910 und 2 821 342 zeigt die Erfindung verbesserte Kälteflexibilität, Zugfestigkeit, Bruchdehnung und Schrumpfverhalten.

Die Kennzeichnung auf Basis der Schmelzindizes erfolgt auch wegen der hierin enthaltenen Aussage über die Fließfähigkeit und damit Verarbeitbarkeit der Formmasse. Die erfindungsgemäße Formmasse soll insbesondere auch durch Spritzgießen verarbeitbar sein und soll daher einen Schmelzindex MFI (230/5) von wenigstens etwa 8 aufweisen. Bevorzugt wird ein modifiziertes Äthylen-Propylen-Mischpolymerisat eingesetzt, das einen Polyäthylenblock von 5 bis 25 Gew.-%, bezogen auf 100 Gew.-% modifiziertes Äthylen-Propylen-Mischpolymerisat, enthält. Bei den erfindungsgemäß vorgesehenen modifizierten Äthylen-Propylen-Mischpolymerisaten bleibt das ursprünglich vorhandene Polyäthylen als Polyäthylenblock in kristalliner Form erhalten. Überraschend hat sich herausgestellt, daß eine erfindungsgemäße Formmasse mit den gewünschten Eigenschaften auch dadurch erzielbar ist, daß der Polyäthylenblock des modifizierten Äthylen-Propylen-Mischpolymerisates gewichtsmäßig anteilig auf die Menge des in der Formmasse vorgesehene Polyäthylen (Komponente c) des Hauptanspruchs) anrechenbar ist.

Die erfindungsgemäße Formmasse ist besonders geeignet zum Herstellen von technischen Formteilen, die einerseits hohen Temperaturen bis 100°C, aber auch sehr niedrigen Temperaturen unter −30°C ausgesetzt sind, wobei die übrigen mechanischen Eigenschaften ein ausgewogen hohes Niveau zeigen. Ein bevorzugtes Anwendungsgebiet ist das Herstellen von Stoßfängern für Kraftfahrzeuge, die auch noch Stoßbeanspruchungen bei niedrigen Temperaturen bis −40°C aushalten müssen. Die erfindungsgemäße Formmasse wird auch diesen extremen Beanspruchungen dadurch gerecht, daß sie einerseits zum Erreichen der erforderlichen Kerbschlagzähigkeit bei tiefen Temperaturen einen ausreichenden Anteil von Äthylen-Propylen-Mischpolymerisat aufweist, der jedoch eine gewisse Erniedrigung der Wärmeformbeständigkeit mit sich bringt. Dieser Erniedrigung der Wärmeformbeständigkeit wird durch Einsatz einer erfindungsgemäßen Menge ausgewählter Polypropylen-

3

Homopolymer und/oder Propylen-Mischpolymere entgegengewirkt, die der Formmasse verbesserte mechanische Eigenschaften bei tiefen Temperaturen und zugleich gute Wärmeformbeständigkeit verleihen. Die Schmelzbereiche der eingesetzten Propylen-Mischpolymere liegen vorzugsweise über 155°C, bevorzugt zwischen 160 bis 162°C. Propylen-Mischpolymere haben jedoch den Nachteil, daß sie in Abmischung mit Äthylen-Propylen-Mischpolymerisaten eine relativ große Nachschwindung (Schrumpfung) bei spritzgegossenen Formteilen bewirken. Dieses führt zu Schwierigkeiten bei der Herstellung entsprechender maßhaltiger Spritzgußteile. Überraschend hat sich herausgestellt, daß die dritte Komponente Polyäthylen nicht nur ihre sonst bekannten Eigenschaften einbringt, sondern offensichtlich diese Nachschwindung verringert, bis weitgehend ausgleichen kann. Besonders vorteilhaft hat sich ein Polyäthylen mit einem MFI (230/5) größer 15, vorzugsweise jedoch zwischen 20 bis 50 erwiesen, das in Mengen zwischen 4 bis 30 Gew.-Teilen, bezogen auf die Formmasse, vorzugsweise 6 bis 20 Gew.-% in der Formmasse enthalten ist. Vorteilhaft wird hierbei ein Niederdruckpolyäthylen eingesetzt.

Bevorzugt werden für die erfindungsgemäße Formmasse Propylen-Mischpolymere mit einem Schmelzindex MFI (230/5) zwischen 20 und 40 g/10 min, die einen Äthylengehalt unter 12 Gew.-% enthalten, eingesetzt.

Bevorzugte erfindungsgemäße Formmassen, ausgehend von den vorangehend beschriebenen Komponenten mit optimalen Eigenschaften weisen ein Verhältnis der Schmelzindizes MFI (230/5) des Polyäthylens zum modifizierten Äthylen-Propylen-Mischpolymerisat gleich oder größer 15 auf, bevorzugt jedoch größer 25. Hierbei ist es vorteilhaft, zugleich das Verhältnis der Schmelzindizes des Polyäthylens zu dem des Polypropylen-Homopolymerisates bzw. Propylen-Mischpolymers zwischen 0,25 und 3,0 vorzusehen.

Die Formmassen nach der Erfindung können auch bekannterweise mit Hilfe der für Kunststoffe üblichen Apparatur, wie Walzen, Extruder, Mischer und Kneter, hergestellt werden, wobei alle Komponenten gleichzeitig vermischt werden können. Die Vermischung ist vorteilhaft bei erhöhter Temperatur, insbesondere bei einer Temperatur zwischen 180 und 280°C unter Einwirkung von Scherkräften durchzuführen.

Der erfindungsgemäßen Formmasse können zusätzlich bekannte Zusatzstoffe, wie Farbmittel, Gleitmittel, Füllstoffe, Antioxydationsmittel, UV-Stabilisatoren, Flammschutzmittel, Fasern od. dgl., zugegeben werden.

Es ist auch möglich, die erfindungsgemäßen ternären Formmassen mit anderen Kunststoffen beispielsweise zur Verbesserung deren Schlagfestigkeit zuzugeben.

Das für die Erfindung verwendete Äthylen-Propylen-Mischpolymerisat weist vorzugsweise einen Äthylen-Gehalt von mehr als 70 Gew.-% auf. Äthylen-Propylen-Mischpolymerisate mit hoher Festigkeit, high-green-strength-Kautschuke, sind pelletisierbar und verleihen damit auch einer Formmasse einen verarbeitungstechnischen Vorteil gegenüber amorphen oder nahezu amorphen Äthylen-Propylen-Mischpolymerisaten, die nicht pelletisierbar sind. Erfindungsgemäß werden in Gegenwart von Polyäthylen Polymerisate Äthylen-Propylen-Mischpolymerisate eingesetzt, wobei die Äthylen-Propylen-Mischpolymerisate amorph bzw. nahezu amorph sind. Trotz des amorphen Charakters der eingesetzten Äthylen-Propylen-Mischpolymerisate hat sich überraschend herausgestellt, daß diese modifizierten Äthylen-Propylen-Mischpolymerisate dennoch pelletisierbar sind. Bevorzugt wird ein Äthylen-Propylen-Mischpolymer und/oder ein Äthylen-Propylen-Terpolymer, bestehend aus 65 bis 82 Gew.-% Äthylen, 18 bis 35 Gew.-% Propylen und 0 bis 8 Gew.-% Terkomponente, eingesetzt. Als Terkomponente werden in der Regel Dicyclopentadien, Alkylidennorbonen, Alkenylnorbonen, Alkadiene und Cycloalkadiene verwendet. Die Erfindung wird nachfolgend an einigen Beispielen mit Vergleichen erläutert. Sofern nichts anderes für den MFI angegeben ist, ist stets Schmelzindex MFI (230/5) g/10 min gemeint.

Für die Prüfung von Eigenschaften werden folgende Methoden angewendet:

Schmelzindex MFI (230/5) g/10 min nach DIN 53 735 oder MFI (190/2, 16) g/10 min,
Zugfestigkeit N/mm² nach DIN 53 455,
Kerbschlagzähigkeit nach DIN 53 453 bei verschiedenen Temperaturen,
un = nicht gebrochen; g = gebrochen,
Bruchdehnung in % nach DIN 53 455,
Vicat-Erweichungstemperatur VSTA°C, Schrumpf gemessen nach 48 h Lagerung bei Raumtemperatur in mm.

## Beispiel 1

Eine als Vergleich ausgeführte binäre Mischung aus 43 Gew.-Teilen eines EPDM mit einem MFI von 0,8 wird mit 57 Gew.-Teilen Polypropylen-Homopolymerisat mit einem MFI von 55 homogenisiert und zu einem Granulat verarbeitet. Das so hergestellte Granulat wird bei 220 bis 260°C Massetemperatur zu einem Formteil in Gestalt eines Stoßfängers verspritzt, das eine Sollänge von 1436 mm bei Entnahme aus der Spritzgußform aufweist. Durch Lagerung bei Raumtemperatur findet eine Nachschwindung (Schrumpfung) des Formteils statt. Nach 48 h zeigt der Stoßfänger nur noch eine Länge von

4

**0 039 395**

1435,5 mm, d. h. einen Schrumpf von —0,5 mm gegenüber Sollänge. Weitere Eigenschaften finden sich in der Tabelle.

### Beispiel 2

Eine als Vergleich ausgeführte Mischung aus 40 Gew.-Teilen eines EPDM's mit einem MFI von 0,8 wird mit 50 Gew.-Teilen eines Polypropylen-Homopolymerisats mit einem MFI von 55 und 10 Gew.-Teilen eines Propylen-Mischpolymeren mit einem MFI von 25 wie in Beispiel 1 homogenisiert und zu Granulat verarbeitet. Ein aus diesem Granulat unter gleichen Spritzbedingungen wie in Beispiel 1 gefertigter Stoßfänger zeigt nach 48 h Lagerung eine Länge von —1,5 mm gegenüber Sollänge. Dieses Beispiel zeigt, daß bereits eine geringe Menge eines Propylen-Mischpolymeren eine hohe Schwindung des Formteils bewirkt.

### Beispiel 3

Eine als Vergleich ausgeführte binäre Mischung aus 36 Gew.-Teilen EPDM mit einem MFI von 0,8 und 64 Gew.-Teilen eines Propylen-Mischpolymerisates mit einem MFI von 25 in einem Kneter homogenisiert und zu einem Granulat verarbeitet, wie in Beispiel 1 beschrieben. Das so hergestellte Granulat wird bei einer Massetemperatur von 220 bis 260°C zu einem Formteil verspritzt mit einer Sollänge von 1436 mm. Nach Lagerung des Formteiles bei Raumtemperatur nach Entnahme aus der Spritzgußform zeigt die binäre Formmasse eine Nachschwindung des Formteiles, wobei nach 48 h bereits eine Schrumpfung von —2,5 mm gegenüber Sollmaß auftritt.

Weitere Eigenschaften der binären Formmasse sind in der beigefügten Tabelle aufgeführt.

### Beispiel 4

Es wird als Vergleich eine weitere binäre Formmasse aus einer Mischung von 39 Gew.-Teilen EPDM mit einem MFI von 0,8, 37 Gew.-Teilen eines Propylen-Mischpolymerisates mit einem MFI von 25 und 24 Gew.-Teilen eines Propylen-Mischpolymerisates mit einem MFI von 65 hergestellt, wie im Beispiel 1 beschrieben und zu einem Formteil wie in Beispiel 1 beschrieben verspritzt. Das aus der Spritzgußform entnommene Formteil zeigt nach 48 h Lagerung bei Raumtemperatur bereits eine Schrumpfung in der Länge von —1,5 mm gegenüber dem Anfangsmaß (Sollmaß). Hier zeigt sich, daß auch die Verwendung eines gut fließfähigen Propylen-Mischpolymerisates mit einem hohen Schmelzindex die Schrumpfneigung nicht ausgleichen kann.

Weitere Eigenschaften sind in der beigefügten Tabelle aufgeführt.

### Beispiel 5

Als weiteres Vergleichsbeispiel wird eine binäre Mischung aus 48 Gew.-Teilen eines EPDM mit einem MFI von 0,8 und 52 Gew.-Teilen eines Polypropylen-Homopolymerisates mit einem MFI von 55 hergestellt und zu einem Formteil verspritzt, wie im Beispiel 1 beschrieben. Nach 48 h Lagerung bei Raumtemperatur zeigt das Formteil eine Nachschwindung von ±0 gegenüber der Sollänge.

Weitere Erläuterungen siehe Tabelle.

### Beispiel 6

Wie in Beispiel 1 beschrieben, wird eine erfindungsgemäße Formmasse aus 46 Gew.-Teilen eines modifizierten EPDM mit einem MFI von 1,3, das durch Aufpolymerisieren des EPDM-Anteiles auf ein Polyäthylen hergestellt wurde mit einem Anteil von 10 Gew.-Teilen Polyäthylen, bezogen auf 100 Gew.-Teile modifiziertes EPDM und 54 Gew.-Teile eines Polypropylen-Homopolymerisates mit einem MFI von 55 zu einem Formteil verspritzt. Nach Lagerung bei Raumtemperatur über 48 h zeigt das Formteil gegenüber dem Sollmaß von 1436 mm eine Verlängerung von +1,5 mm. Bereits die im modifizierten EPDM enthaltene Menge von 4,6 Gew.-Teilen Polyäthylen reicht aus, um die gewünschten Eigenschaften zu erhalten. Weitere Angaben siehe Tabelle.

### Beispiel 7

Wie in Beispiel 1 beschrieben, wird eine erfindungsgemäße Formmasse aus 38 Gew.-Teilen eines modifizierten EPDM mit einem MFI von 1,3, das durch Aufpolymerisieren des EPDM-Anteiles auf ein

5

Polyäthylen hergestellt wurde mit einem Anteil von 10 Gew.-Teilen Polyäthylen, bezogen auf 100 Gew.-Teile modifiziertes EPDM und 52 Gew.-Teilen eines Propylen-Mischpolymerisates mit einem MFI von 25 und 10 Gew.-Teilen eines Polyäthylens mit einem MFI von 30 hergestellt und zu einem Formteil verspritzt. Nach Lagerung bei Raumtemperatur über 48 Stunden zeigt das Formteil gegenüber der Solllänge von 1436 mm eine Verlängerung von +1,5 mm. Insgesamt weist die Formmasse $10+3,8=13,8$ Gew.-Teile Polyäthylen auf.

Weitere Eigenschaften siehe Tabelle.

### Beispiel 8

Als Vergleichsbeispiel wurde aus der DE-OS 2 821 342 das Beispiel 2 der Tabelle 2 übernommen. Hier wird aus 45 Gew.-Teilen eines amorphen EPDM/Kristallinität unter 0,25% und Mooney Viscosität ML (1+4) 125° C von 52 mit einer Zugfestigkeit von 6,5 N/mm² und 50 Gew.-Teilen Propylen-Homopolymer mit einer Dichte von 0,905 g/cm³ und einem MFI (230/2,16) von 5,2 dg/min entsprechend einem MFI (230/5) von 21 und 5 Gew.-Teilen Polyäthylen mit einer Dichte 0,963 g/cm³, MFI (190/2,16) von 8, eine Mischung hergestellt und zu einer Platte verpreßt. Diese Platte zeigt jedoch mit einer Zugfestigkeit von 10,0 N/mm², Bruchdehnung von 150% sehr mäßige mechanische Eigenschaften, die auch eine geringe Kälteflexibilität bedeuten.

### Beispiel 9

Ein weiteres Vergleichsbeispiel aus der DE-OS 2 821 342, aus Tabelle 6, Beispiel 1, besteht aus einer Formmasse, enthaltend 40 Gew.-Teile EPDM wie in Beispiel 8 beschrieben, 55 Gew.-Teile Polypropylen-Homopolymer wie in Beispiel 8 beschrieben und 5 Gew.-Teile eines Polyäthylens wie in Beispiel 8 beschrieben. Diese Mischung zeigt zwar eine Steigerung der mechanischen Eigenschaften gegenüber Beispiel 8, was auf die Eigenschaften des Polyäthylens hoher Dichte zurückgeführt wird, jedoch ist die Masse mit einem Gesamt-MFI von 5,2 nicht für das Spritzgießen geeignet.

### Beispiel 10

Ein weiteres Vergleichsbeispiel wird aus der DE-OS 2 828 763 zitiert, aus Tabelle 4 Beispiel IV. Hier wird aus 6 Gew.-Teilen eines Mischpolymerisats, bestehend aus 44 Gew.-% Äthylen und 56 Gew.-% Propylen, MFI (230/5) von 1,5 g/10 min und 4 Gew.-Teilen Polyäthylen mit einer Dichte von 0,947 g/cm³ und einem MFI (190/5) von 1,6 g/10 min eine Kautschukvormischung hergestellt und mit 90 Gew.-Teilen Polypropylen einer Dichte von 0,903 g/cm³ und einem MFI (230/5) von 9,5 g/10 min, das 6,4 Gew.-% Äthylen enthält, vermischt und zu einem Prüfkörper verarbeitet. Die Formmasse zeigt zwar mit einem Gesamt-MFI von 9,4 ihre Verarbeitbarkeit im Spritzguß an, was im übrigen für alle anderen in der DE-OS 2 828 763 ausgeführten Beispiele nicht gültig ist, jedoch in ihrer Kälteflexibilität gemäß den gemachten Angaben begrenzt und bei tiefen Temperaturen von −30° C und −40° C nicht mehr gegeben.

| Bei-spiel | EPDM/EPM Gew.-T. MFI Zugfest. | PP-H Gew.-T. MFI | PP-CO Gew.-T. MFI | PE Gew.-T. MFI 190/2,16 | MFI d. Mischung 230/5 | Vicat °C | Bruch-dehnung % | Zug-fest. N/mm² | Kerbschlag-zähigkeit °C | −20°C | −40°C | Schrumpf mm | Bewertung Vicat | Kerb. | Schrumpf |
|---|---|---|---|---|---|---|---|---|---|---|---|---|---|---|---|
| 1 | 43 0,8 24,8 | 57 55 | | | 17 | 107 | 550 | 28 | un | g | g | −0,5 | gut | sehr schlecht | gut |
| 2 | 40 0,8 24,8 | 50 55 | 10 25 | | 15 | 106 | 576 | 28,7 | un | g | g | −1,5 | gut | sehr schlecht | schlecht |
| 3 | 36 0,8 24,8 | | 64 25 | | 12,1 | 113 | 590 | 28,4 | un | un | g | −2,5 | gut | gut | sehr schlecht |
| 4 | 39 0,8 24,8 | | 37 25 + 24 65 | | 6,7 | 101 | 593 | 22,2 | un | un | un | −1,5 | mäßig | sehr gut | schlecht |
| 5 | 48 0,8 24,8 | 52 55 | | | 13,2 | 95 | 610 | 20,7 | un | un | g | ±0 | schlecht | gut | gut |
| 6 | 46 1,3 | 54 55 | | (4,6) | 15,7 | 110 | 482 | 26,1 | un | un | un | +1,5 | gut | sehr gut | gut |
| 7 | 38 1,3 — | | 52 25 | 10 (+3,8) | 12,8 | 110 | 500 | 23,2 | un | un | un | +1,5 | gut | sehr gut | gut |
| 8 | 45 — 6,5 | 50 21 | | 5 8 | | | 150 | 10,0 | | | | | | schlecht | |
| 9 | 40 — 6,5 | 55 21 | | 5 8 | 5,2 | | 430 | 21,3 | | | g | | | | |
| 10 | 6 1,5 — | 90 9,5 | | 4 | 9,4 | | | | | g | g | | | | sehr schlecht |

0 039 395

Kommentar zur Tabelle:

In der Tabelle sind die aufgeführten Beispiele ergänzt mit den wichtigsten Eigenschaften, die etwas über das gewünschte Anforderungsprofil für so hoch beanspruchte technische Teile wie beispielsweise Stoßfänger aussagen, zusammengestellt.

Der MFI der Gesamtmischung gibt einen Hinweis auf die Fließeigenschaften und damit über die Eignung zum Verarbeiten durch Spritzgießen, hier zeigen MFI-Werte ab etwa 8 die gute Verarbeitbarkeit an. Der Vicat-Wert steht für die gute Wärmeformbeständigkeit, Dehnung und Zugfestigkeit für die allgemeinen mechanischen Eigenschaften, Kerbschlagzähigkeit als Maß für die Kälteflexibilität bei extrem tiefen Temperaturen und der Schrumpf als Maß für die Güte und Maßhaltigkeit der Herstellbarkeit von Spritzguß-Formteilen. Die in der Tabelle vorgenommene Bewertung steht unter dem Gesichtspunkt eines hohen Anforderungsprofils mehrerer Eigenschaften. Es geht hieraus eindeutig hervor, daß oft einseitig gute Eigenschaftswerte mit anderen schlechten gekoppelt sind. Die vielen Vergleichsbeispiele 1 bis 5, 8 bis 10 zeigen eindeutig, daß jeweils ein oder mehrere der gewünschten Eigenschaften unzureichend gemäß dem erfindungsgemäßen Anforderungsprofil sind und es der Erfindung, gemäß Beispielen 6 und 7, vorbehalten ist, ein in allen gewünschten Eigenschaften gutes und sehr gutes Verhalten aufzuweisen.

Beispiele 1 und 5 zeigen, daß binäre thermoplastische Mischungen aus EPDM und Polypropylen-Homopolymerisat bei zu niedrigem Gehalt an EPDM keine ausreichende Kälteflexibilität (Beispiel 1) und bei höherem Gehalt an EPDM eine niedrige Wärmeformbeständigkeit (Beispiel 5) aufweisen. Eine Optimierung der gewünschten Eigenschaften ist nicht möglich.

Beispiel 2 zeigt, daß durch Zusatz von Polypropylen-Copolymeren zu Mischungen gemäß Beispiel 1 die Nachschwindung der Formteile ungünstig beeinflußt, d. h. vergrößert wird, im übrigen aber auch keine sonstigen Verbesserungen der gewünschten Eigenschaftswerte auftreten.

Beispiel 3 zeigt, daß binäre Mischungen aus EPDM und Propylen-Mischpolymeren in bezug auf die Kälteflexibilität Mischungen gemäß Beispiel 1 mit Polypropylen-Homopolymeren überlegen sind, jedoch erheblichen Schrumpf aufweisen, was sich nachteilig auf die Verarbeitbarkeit zu maßhaltigen Spritzgußformteilen mit komplizierter Gestalt auswirkt.

Beispiel 4 zeigt im Vergleich zu Beispiel 3, daß der Zusatz von sehr gut fließfähigem Propylen-Mischpolymeren (MFI 65) zwar die Kälteflexibilität noch verbessert, jedoch den Nachteil eines zu hohen Schrumpfes nicht ausgleichen kann.

Beispiel 6 einer erfindungsgemäßen Formmasse zeigt erstmalig ein ausgewogenes Eigenschaftsbild mit guten und sehr guten Werten bezüglich mechanischer Eigenschaften, Kälteflexibilität, Schrumpf, Spritzbarkeit und Wärmeformbeständigkeit. Das gleiche gilt für das erfindungsgemäße Beispiel 7.

Die Beispiele 8 und 9 zeigen bekannte ternäre Formmassen auf Basis amorpher bzw. nahezu amorpher Äthylen-Propylen-Polymerisate, die ein von der Erfindung erheblich abweichendes Eigenschaftsbild ergeben, insbesondere was ihre schlechte Verarbeitbarkeit im Spritzgießverfahren und ihre mäßigen mechanischen Eigenschaften, wie Bruchdehnung und Zugfestigkeit deutlich offenbaren. Diesen Formmassen ist die Erfindung stets überlegen.

Das Beispiel 10 zeigt eine ternäre Formmasse mit sehr niedrigen EPDM-Gehalten, deren mechanische Eigenschaften und Kälteflexibilität ebenfalls der Erfindung eindeutig unterlegen ist.

## Patentansprüche

1. Formmasse auf Basis von Äthylen-Propylen-Mischpolymerisat, Polypropylen und Polyäthylen, gekennzeichnet durch

a) 35 bis 50 Gew.-% eines durch Aufpolymerisieren des Äthylen-Propylen-Mischpolymer und/oder Äthylen-Propylen-Terpolymer auf Polyäthylen hergestelltes modifiziertes Äthylen-Propylen-Mischpolymerisat mit einem Äthylengehalt des Äthylen-Propylen-Mischpolymerisatanteiles von mindestens 65 Gew.-%, einem Schmelzindex MFI (230/5) von 0,8 bis 2,0 g/10 min und

b) 30 bis 60 Gew.-% Polypropylen-Homopolymer mit einem Schmelzindex MFI (230/5) von 25 bis 65 g/10 min und/oder Propylen-Mischpolymer mit einem Schmelzindex MFI (230/5) von 15 bis 50 g/10 min und

c) 3 bis 30 Gew.-% Polyäthylen, wobei der Polyäthylenblock des modifizierten Äthylen-Propylen-Mischpolymerisates auf die Menge des Polyäthylens anrechenbar ist.

2. Formmasse nach Anspruch 1, dadurch gekennzeichnet, daß ein modifiziertes Äthylen-Propylen-Mischpolymerisat, enthaltend 5 bis 25 Gew.-% Polyäthylen als Polyäthylenblock, bezogen auf 100 Gew.-% modifiziertes Äthylen-Propylen-Mischpolymerisat, vorgesehen ist.

3. Formmasse nach Anspruch 1, dadurch gekennzeichnet, daß ein Polyäthylen mit einem Schmelzindex MFI (230/5) größer 15, vorzugsweise zwischen 20 und 50 g/10 min vorgesehen ist.

4. Formmasse nach Anspruch 1, dadurch gekennzeichnet, daß ein Propylen-Mischpolymeres mit einem Schmelzindex MFI (230/5) zwischen 20 und 40 g/10 min vorgesehen ist.

5. Formmasse nach einem der Ansprüche 1 bis 4, dadurch gekennzeichnet, daß ein Propylen Misch polymeres mit einem unter 12 Gew.-% betragenden Äthylengehalt vorgesehen ist.

6. Formmasse nach einem der Ansprüche 1 bis 5, dadurch gekennzeichnet, daß ein Äthylen Propy len-Mischpolymer und/oder ein Äthylen-Propylen-Terpolymer aus

    65 bis  82 Gew.-%  Äthylen
    18 bis  35 Gew.-%  Propylen
     0 bis   8 Gew.-%  Terkomponente

vorgesehen sind.

7. Formmasse nach Anspruch 6, dadurch gekennzeichnet, daß ein Äthylen-Propylen-Mischpolymerisat mit mehr als 70 Gew.-% Äthylengehalt vorgesehen ist.

8. Verwendung einer Formmasse nach einem der Ansprüche 1 bis 7 zum Herstellen von Stoßfängern durch Spritzgießen für Kraftfahrzeuge.


## Claims

1. Moulding composition based on ethylene-propylene interpolymer, polypropylene and polyethylene characterised by

a)   35 to 50% by weight of a modified ethylene-propylene interpolymer produced by polymerisation of the ethylene-propylene copolymer and/or ethylene-propylene terpolymer on polyethylene and with the ethylene-propylene interpolymer component having an ethylene content of at least 65% by weight, a melt index MFI (230/5) of 0.8 to 2.0 g/10 min, and

b)   30 to 60% by weight of polypropylene-homopolymer with a melt index MFI (230/5) of 25 to 65 g/10 min and/or propylene-copolymer with a melt index MFI (230/5) of 15 to 50 g/10 min, and

c)   3 to 30% by weight of polyethylene, with the polyethylene block of the modified ethylene-propylene interpolymer being calculable with respect to the amount of polyethylene.

2. Moulding composition according to claim 1, characterised in that there is provided a modified ethylene-propylene interpolymer containing 5 to 25% by weight of polyethylene as polyethylene block related to 100% by weight of modified ethylene-propylene interpolymer.

3. Moulding composition according to claim 1, characterised in that a polyethylene with a melt index MFI (230/5) greater than 15, preferably between 20 and 50 g/10 min, is provided.

4. Moulding composition according to claim 1, characterised in that a propylene-copolymer with a melt index MFI (230/5) between 20 and 40 g/10 min is provided.

5. Moulding composition according to one of claims 1 to 4, characterised in that a propylene copolymer with ethylene content amounting to less than 12% by weight is provided.

6. Moulding composition according to one of claims 1 to 5, characterised in that an ethylene-propylene copolymer and/or an ethylene-propylene terpolymer formed from

    65 to  82%  by weight of ethylene
    18 to  35%  by weight of propylene
     0 to   8%  by weight of tercomponents

is provided.

7. Moulding composition according to claim 6, characterised in that an ethylene-propylene copolymer with more than 70% by weight ethylene content is provided.

8. Use of a moulding composition according to one of claims 1 to 7 for the production of bumpers for motor vehicles by injection moulding.

## Revendications

1. Matière à mouler à base de copolymères d'éthylène-propylène, de polypropylène et de polyéthylène, caractérisée par

a)   35 à 50% en poids d'un copolymère d'éthylène-propylène modifié préparé par polymérisation du copolymère d'éthylène-propylène et/ou d'un terpolymère d'éthylène-propylène sur du polyéthylène avec une teneur en éthylène du constituant copolymère d'éthylène-propylène d'au moins 65% en poids, un indice d'écoulement à l'état fondu MFI (230/5) de 0,8 à 2 g/10 min, et

b)   30 à 60% en poids d'un homopolymère de polypropylène ayant un indice d'écoulement à l'état fondu MFI (230/5) de 25 à 65 g/10 min et/ou un copolymère de propylène ayant un indice d'écoulement à l'état fondu MFI (230/5) de 15 à 50 g/10 min, et

**0 039 395**

c)   3 à 30% en poids de polyéthylène, la séquence polyéthylène du copolymère d'éthylène-propylène modifié étant calculée sur la quantité du polyéthylène.

2. Matière à mouler selon la revendication 1, caractérisée par le fait qu'on utilise un copolymère d'éthylène-propylène modifié contenant 5 à 25% en poids de polyéthylène comme séquence polyéthylène rapporté à 100% en poids du copolymère d'éthylène-propylène modifié.

3. Matière à mouler selon la revendication 1, caractérisée par le fait qu'on utilise un polyéthylène ayant un indice d'écoulement à l'état fondu MFI (230/5) supérieur à 15, de préférence compris entre 20 et 50 g/10 min.

4. Matière à mouler selon la revendication 1, caractérisée par le fait qu'on utilise un copolymère de propylène ayant un indice d'écoulement à l'état fondu MFI (230/5) compris entre 20 et 40 g/10 min.

5. Matière à mouler selon l'une des revendications 1 à 4, caractérisée par le fait qu'on utilise un copolymère de propylène ayant une teneur en éthylène inférieure à 12% en poids.

6. Matière à mouler selon l'une des revendications 1 à 5, caractérisée par le fait qu'on utilise un copolymère d'éthylène-propylène et/ou un terpolymère d'éthylène-propylène constitué par

65 à 82%  en poids d'éthylène
18 à 35%  en poids de propylène
 0 à  8%  du troisième composant.

7. Matière à mouler selon la revendication 6, caractérisée par le fait qu'on utilise un copolymère d'éthylène-propylène ayant une teneur en éthylène supérieure à 70% en poids.

8. Utilisation d'une matière à mouler selon l'une des revendications 1 à 7, pour la fabrication de pare-chocs par moulage par injection pour véhicules à moteur.

10